(19) Europäisches Patentamt
European Patent Office
Office européen des brevets

(11) **EP 3 785 178 B1**

(12) **EUROPÄISCHE PATENTSCHRIFT**

(45) Veröffentlichungstag und Bekanntmachung des Hinweises auf die Patenterteilung:
**05.06.2024 Patentblatt 2024/23**

(21) Anmeldenummer: **19719233.9**

(22) Anmeldetag: **17.04.2019**

(51) Internationale Patentklassifikation (IPC):
**G06N 3/082** (2023.01)  **G06N 3/04** (2023.01)

(52) Gemeinsame Patentklassifikation (CPC):
**G06N 3/082;** G06N 3/04

(86) Internationale Anmeldenummer:
**PCT/EP2019/059992**

(87) Internationale Veröffentlichungsnummer:
**WO 2019/206776 (31.10.2019 Gazette 2019/44)**

(54) **VERFAHREN UND VORRICHTUNG ZUM ERMITTELN EINER NETZKONFIGURATION EINES NEURONALEN NETZES**

METHOD AND DEVICE FOR DETERMINING A NETWORK-CONFIGURATION OF A NEURAL NETWORK

PROCEDE ET DISPOSITIF POUR DETERMINER UNE CONFIGURATION DE RESEAU D'UN RESEAU NEURONAL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.04.2018 DE 102018109851**

(43) Veröffentlichungstag der Anmeldung:
**03.03.2021 Patentblatt 2021/09**

(73) Patentinhaber: **Robert Bosch GmbH**
**70442 Stuttgart (DE)**

(72) Erfinder:
- **METZEN, Jan Hendrik**
**71034 Boeblingen (DE)**
- **ELSKEN, Thomas**
**71069 Sindelfingen (DE)**
- **HUTTER, Frank**
**79110 Freiburg (DE)**

(56) Entgegenhaltungen:
**DE-A1-102014 212 556   US-A1- 2018 060 724**

- **THOMAS ELSKEN ET AL: "Simple And Efficient Architecture Search for Convolutional Neural Networks", ARXIV.ORG, CORNELL UNIVERSITY LIBRARY, 201 OLIN LIBRARY CORNELL UNIVERSITY ITHACA, NY 14853, 13. November 2017 (2017-11-13), XP081287784, in der Anmeldung erwähnt**
- **SMITHSON SEAN C ET AL: "Neural networks designing neural networks: Multi-objective hyper-parameter optimization", 2016 IEEE/ACM INTERNATIONAL CONFERENCE ON COMPUTER-AIDED DESIGN (ICCAD), ACM, 7. November 2016 (2016-11-07), Seiten 1-8, XP033048930, DOI: 10.1145/2966986.2967058 [gefunden am 2017-01-19]**
- **THOMAS ELSKEN ET AL: "Multi-objective Architecture Search for CNNs", ARXIV.ORG, CORNELL UNIVERSITY LIBRARY, 201 OLIN LIBRARY CORNELL UNIVERSITY ITHACA, NY 14853, 24. April 2018 (2018-04-24), XP081229480,**

EP 3 785 178 B1

**Beschreibung**

Technisches Gebiet

Die Erfindung betrifft neuronale Netze, zur Realisierung von Funktionen eines technischen Systems, in Form eines Roboters, eines Fahrzeugs, eines Werkzeugs oder einer Werkmaschine. Weiterhin betrifft die Erfindung die Architektursuche von neuronalen Netzen, um eine hinsichtlich eines oder mehrerer Parameter optimierte Konfiguration eines neuronalen Netzes für eine bestimmte Anwendung aufzufinden.

Technischer Hintergrund

Die Leistungsfähigkeit von neuronalen Netzen wird maßgeblich durch ihre Architektur bestimmt. Die Architektur eines neuronalen Netzes wird beispielsweise durch dessen Netzkonfiguration vorgegeben, die durch die Anzahl der Neuronenschichten und, die Art der Neuronenschichten (lineare Transformationen, nichtlineare Transformationen, Normalisierung, Verknüpfung mit weiteren Neuronenschichten usw.) und dergleichen gegeben ist. Insbesondere bei zunehmender Komplexität der Anwendungen bzw. der zu lösenden Aufgaben ist das zufällige Auffinden von geeigneten Netzkonfigurationen aufwändig, da jeder Kandidat einer Netzkonfiguration zunächst trainiert werden muss, um dessen Leistungsfähigkeit evaluieren zu können.

Um das Auffinden einer geeigneten Netzkonfiguration zu verbessern, wird in der Regel Expertenwissen angewendet, um die Zahl der Kandidaten für mögliche Netzkonfigurationen vor deren Training zu reduzieren. Auf diese Weise kann eine Suche in einer Teilmenge von sinnvollen Netzarchitekturen vorgenommen werden. Trotz dieses Ansatzes ist die Menge an möglichen Netzkonfigurationen immens. Da eine Bewertung einer Netzkonfiguration nur nach einem Training, z. B. durch Auswerten eines Fehlerwerts, bestimmt wird, führt dies bei komplexeren Aufgaben und entsprechend komplexen Netzkonfigurationen zu erheblichen Suchdauern für eine geeignete Netzkonfiguration.

Aus T. Elsken et al., "Simple and efficient architecture search for convolutional neural networks", ICLR, www.arxiv.net/abs/1711.04528 ist ein Verfahren zur Architektursuche von neuronalen Netzen bekannt, das mithilfe einer Hill-Climbing-Strategie Netzkonfigurationsvarianten hinsichtlich deren Leistungsfähigkeiten evaluiert, wobei diejenigen Netzkonfigurationsvarianten ausgewählt werden, deren Leistungsfähigkeit maximal ist, wobei auf die ausgewählten Konfigurationsvarianten Netzwerkmorphismen angewendet werden, um neu zu evaluierende Netzkonfigurationsvarianten zu generieren. Zur Evaluierung der Leistungsfähigkeit der Konfigurationsvariante wird ein Modelltraining mit festgelegten Trainingsparametern durchgeführt. Das Verwenden von Netzwerkmorphismen reduziert die benötigten Rechenkapazitäten wesentlich durch Wiederverwenden der Informationen aus dem Training der aktuellen Konfigurationsvariante für neu zu evaluierende Konfigurationsvarianten.

Offenbarung der Erfindung

Erfindungsgemäß sind ein Computerimplementiertes Verfahren zum Bestimmen einer Netzkonfiguration für ein neuronales Netz basierend auf Trainingsdaten für eine vorgegebene Anwendung zur Realisierung von Funktionen eines technischen Systems, wobei das technische System ein Roboter, ein Fahrzeug, ein Werkzeug oder eine Werkmaschine ist, gemäß Anspruch 1 sowie eine entsprechende Vorrichtung gemäß Anspruch 10, ein Steuergerät gemäß Anspruch 11, ein Computerprogramm gemäß Anspruch 12, und ein Elektronisches Speichermedium gemäß Anspruch 13, vorgesehen.

Weitere Ausgestaltungen sind in den abhängigen Ansprüchen angegeben.

Eine Idee des obigen Verfahrens besteht darin, ausgehend von einer Anfangsnetzkonfiguration eines neuronalen Netzes Netzkonfigurationsvarianten durch Anwendung von approximativen Netzwerkmorphismen zu generieren und für diese einen Vorhersagefehler zu ermitteln. Die Konfigurationsvarianten werden entsprechend des Vorhersagefehlers bewertet und abhängig von dem Vorhersagefehler ein oder mehrere der Netzkonfigurationen ausgewählt, um daraus ggfs neue Netzkonfigurationsvarianten durch erneutes Anwenden von approximativen Netzwerkmorphismen zu generieren.

Insbesondere für komplexe Anwendungen/Aufgaben werden komplexe Netzkonfigurationen mit einer großen Anzahl von Neuronen benötigt, so dass bislang eine große Menge von Netzparametern während des Trainingsvorgangs trainiert werden muss. Ein umfassendes Training zur Ermittlung des Vorhersagefehlers ist daher aufwändig. Dazu ist vorgesehen den Evaluierungsaufwand zu reduzieren, indem der Vorhersagefehler nach einem mehrphasigen Trainieren der durch die Netzkonfiguration angegebenen neuronalen Netze bestimmt wird. Dies ermöglicht eine Bewertung und eine Vergleichbarkeit der Vorhersagefehler mit deutlich verringertem Rechenaufwand.

Gemäß dem obigen Verfahren ist vorgesehen, zur Reduzierung des Evaluierungsaufwands jedes der zu evaluierenden Netzkonfigurationen für die Bestimmung des Vorhersagefehlers in einer ersten Trainingsphase Netzparameter nur derjenigen Netzteile des neuronalen Netzes weiter zu trainieren, die durch die Anwendung des Netzwerkmorphismus variiert worden sind. Die durch den Netzwerkmorphismus nicht betroffenen Netzteile des neuronalen Netzes werden bei dem Training somit nicht berücksichtigt, d. h. die Netzparameter der durch den Netzwerkmorphismus nicht betroffenen Netzteile des neuronalen Netzes werden für die zu evaluierende variierte Netzkonfiguration übernommen und während des Trainings fixiert, d.h. unverändert belassen. Lediglich die durch die Variation betroffenen Teile des neuronalen Netzes werden somit trainiert. Von einer Variation eines Netzwerkmorphismus betroffen Teile eines Netzwerkes sind alle hinzugefügten und modifizierten Neuronen und alle Neuronen, die eingangsseitig oder ausgangsseitig mit mindestens einem hinzugefügten, modifizierten oder entfernen Neuron in Verbindung stehen.

Anschließend werden in einer weiteren Trainingsphase das neuronale Netz der zu evaluierenden Netzkonfiguration ausgehend von dem Trainingsergebnis der ersten Trainingsphase entsprechend gemeinsamen weiteren Trainingsbedingungen weiter trainiert.

Das obige Verfahren hat den Vorteil, dass durch das mehrphasige Training ein schnelleres Erreichen eines aussagekräftigen und vergleichbaren Vorhersagefehlers möglich ist, als dies bei einem einphasigen herkömmlichen Training ohne Übernahme von Netzparametern der Fall wäre. Ein solches Training kann einerseits deutlich schneller bzw. mit deutlich geringerem Ressourcenverbrauch durchgeführt werden und so die Architektursuche insgesamt schneller durchgeführt werden. Andererseits ist das Verfahren ausreichend, um zu evaluieren, ob durch die Modifikation des neuronalen Netzes eine Verbesserung der Leistungsfähigkeit des betreffenden neuronalen Netzes erreicht werden kann.

Weiterhin können die Schritte a) bis e) iterativ mehrfach durchgeführt werden, indem eine jeweils gefundene Netzkonfiguration als aktuelle Netzkonfiguration für die Generierung mehrerer zu evaluierender Netzkonfigurationen verwendet wird. Somit wird das Verfahren iterativ fortgesetzt, wobei nur Netzkonfigurationsvarianten der neuronalen Netze weiterentwickelt werden, bei denen der Vorhersagefehler eine Verbesserung der zu bewertenden Leistung der Netzkonfiguration anzeigt.

Insbesondere kann das Verfahren beendet werden, wenn eine Abbruchbedingung erfüllt ist, wobei die Abbruchbedingung das Eintreten mindestens eines der folgenden Ereignisse beinhaltet:

- eine vorbestimmte Anzahl von Iterationen wurde erreicht,
- ein vorbestimmter Vorhersagefehlerwert durch mindestens eine der Netzkonfigurationsvarianten wurde erreicht.

Weiterhin können die approximative Netzwerkmorphismen jeweils eine Änderung einer Netzkonfiguration bei einem aktuellen Trainingszustand vorsehen, bei denen sich der Vorhersagefehler anfangs erhöht, allerdings nach der ersten Trainingsphase um nicht mehr als einen vorgegeben maximalen Fehlerbetrag ändert.

Es kann vorgesehen sein, dass die approximativen Netzwerkmorphismen für herkömmliche neuronale Netze jeweils das Entfernen, Hinzufügen und/oder Modifizieren eines oder mehrerer Neuronen oder einer oder mehreren Neuronenschichten vorsehen.

Weiterhin können die approximativen Netzwerkmorphismen für konvolutionelle (faltende) neuronale Netze jeweils das Entfernen, Hinzufügen und/oder Modifizieren eines oder mehrerer Schichten vorsehen, wobei die Schichten eine oder mehrere Faltungsschichten, eine oder mehrere Normalisierungschichten, eine oder mehrere Aktivierungsschichten und eine oder mehrere Zusammenführungsschichten umfassen.

Gemäß einer Ausführungsform können die Trainingsdaten durch Eingangsgrößenvektoren und diesen zugeordneten Ausgangsgrößenvektoren vorgegeben sind, wobei der Vorhersagefehler der jeweiligen Netzkonfiguration nach der weiteren Trainingsphase als ein Maß bestimmt wird, dass sich aus den jeweiligen Abweichungen zwischen Modellwerten, die sich durch das durch die jeweilige Netzkonfiguration bestimmten neuronalen Netzes basierend auf den Eingangsgrößenvektoren ergeben, und den den Eingangsgrößenvektoren zugeordneten Ausgangsgrößenvektoren ergibt. Der Vorhersagefehler kann somit durch Vergleich der Trainingsdaten mit den Feedforward-Berechnungsergebnissen des betreffenden neuronalen Netzes ermittelt werden. Der Vorhersagefehler kann insbesondere basierend auf einem Training unter vorbestimmen Bedingungen, wie beispielsweise mit jeweils den identischen Trainingsdaten für eine vorbestimmte Anzahl von Trainingsdurchgängen ermittelt werden.

Weiterhin können die gemeinsamen vorbestimmten ersten Trainingsbedingungen für das Trainieren jeder der Netzkonfigurationen in der ersten Trainingsphase eine Anzahl von Trainingsdurchläufen und/oder eine Trainingszeit und/oder eine Trainingsmethode vorgeben und/oder wobei die gemeinsamen vorbestimmten zweiten Trainingsbedingungen für das Trainieren jeder der Netzkonfigurationen in der zweiten Trainingsphase eine Anzahl von Trainingsdurchläufen und/oder eine Trainingszeit und/oder eine Trainingsmethode vorgeben.

Kurzbeschreibung der Zeichnungen

Ausführungsformen werden nachfolgend anhand der beigefügten Zeichnungen näher erläutert. Es zeigen:

Figur 1    den Aufbau eines herkömmlichen neuronalen Netzes;
Figur 2    eine mögliche Konfiguration eines neuronalen Netzes mit Rückkopplung und Umgehungsschichten;

Figur 3    ein Flussdiagramm zur Veranschaulichung eines Verfahren zum Ermitteln einer Netzkonfiguration eines neuronalen Netzes;

Figur 4    eine Veranschaulichung eines Verfahrens zum Verbessern einer Netzkonfiguration mithilfe eines Verfahrens zum Ermitteln einer Netzkonfiguration eines neuronalen Netzes; und

Figur 5    eine Darstellung eines Beispiels für eine resultierende Netzkonfiguration für ein konvolutionelles (faltendes) neuronales Netz.

Beschreibung von Ausführungsformen

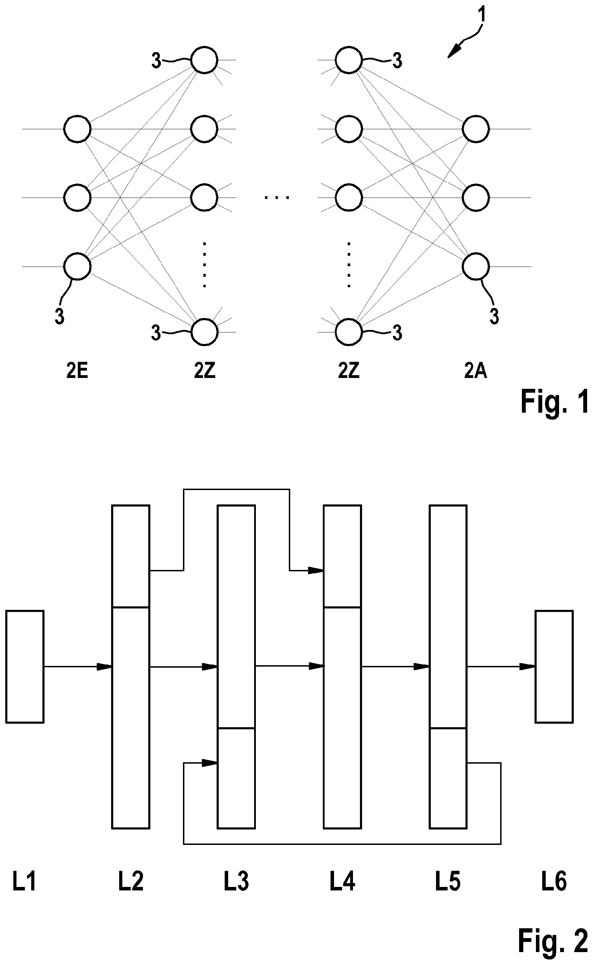

Figur 1 zeigt grundsätzlich den Aufbau eines neuronalen Netzes 1, das in der Regel aus mehreren kaskadierten Neuronenschichten 2 von jeweils mehreren Neuronen 3 aufweist. Die Neuronenschichten 2 weisen eine Eingangsschicht 2E zum Anlegen von Eingangsdaten, mehrere Zwischenschichten 2Z und eine Ausgangsschicht 2A zum Ausgeben von Berechnungsergebnissen auf.

Die Neuronen 3 der Neuronenschichten 2 können dabei einer herkömmlichen Neuronen-Funktion

$$O_j = \varphi\left(\sum_{i=1}^{M}(x_i w_{i,j}) - \theta_j\right)$$

entsprechen, wobei $O_j$ dem Neuronenausgang des Neurons, $\varphi$ der Aktivierungsfunktion, $x_i$ dem jeweiligen Eingangswert des Neurons, $w_{i,j}$ einem Gewichtungsparameter für den i-ten Neuroneneingang in der j-ten Neuronenschicht und $\theta_j$ einer Aktivierungsschwelle entsprechen. Die Gewichtungsparameter, die Aktivierungsschwelle und die Wahl der Aktivierungsfunktion können als Neuronenparameter in Registern des Neurons gespeichert sein.

Die Neuronenausgänge eines Neurons 3 können jeweils als Neuroneneingänge an Neuronen 3 der übrigen Neuronenschichten, d. h. einer der nachfolgenden oder einer der vorangehenden Neuronenschichten 2, weitergegeben oder, wenn es sich um ein Neuron 3 der Ausgangsschicht 2A handelt, als ein Berechnungsergebnis ausgegeben werden.

So gebildete neuronale Netze 1 können als Software oder mithilfe einer Berechnungshardware realisiert sein, die einen Teil oder das gesamte neuronale Netz als elektronische (integrierte) Schaltung abbildet. Eine solche Berechnungshardware wird üblicherweise dann zum Aufbau eines neuronalen Netzes gewählt, wenn die Berechnung sehr schnell erfolgen soll, was mit Umsetzung in Software nicht zu erreichen wäre.

Die Struktur der entsprechenden Software oder Hardware wird durch die Netzkonfiguration vorgegeben, die durch eine Vielzahl von Konfigurationsparametern bestimmt ist. Die Netzkonfiguration bestimmt die Berechnungsvorschriften des neuronalen Netzes. Die Konfigurationsparameter umfassen bei einer herkömmlichen Netzkonfiguration, wie sie beispielsweise in Figur 1 schematisch gezeigt ist, die Anzahl der Neuronenschichten, die jeweilige Anzahl von Neuronen in jeder Neuronenschicht, die Netzparameter, die durch die Gewichtungen, die Aktivierungsschwelle sowie eine Aktivierungsfunktion gegeben sind, Angaben zur Kopplung eines Neurons mit Eingangs- und Ausgangsneuronen und dergleichen.

Abgesehen von der oben beschriebenen Netzkonfiguration sind weitere Konfigurationen von neuronalen Netzen möglich, bei der Neuronen vorgesehen sind, die eingangsseitig mit Neuronen aus verschiedenen Neuronenschichten und ausgangsseitig mit Neuronen verschiedener Neuronenschichten gekoppelt sind. Weiterhin können diesbezüglich insbesondere auch Neuronenschichten vorgesehen sein, die eine Rückkopplung vorsehen, d. h. die eingangsseitig mit Neuronenschichten, die bezüglich des Datenflusses ausgangsseitig der betreffenden Neuronenschicht vorgesehen sind. Diesbezüglich zeigt Fig. 2 schematisch eine mögliche Konfiguration eines neuronalen Netzes mit mehreren Schichten L1 bis L6, die zunächst in an sich bekannter Weise, wie in Figur 1 schematisch dargestellt, miteinander gekoppelt sind, d.h. Neuroneneingänge sind mit Neuronenausgängen der vorangehenden Neuronenschicht verbunden. Ferner weist die Neuronenschicht L3 einen Bereich auf, der eingangsseitig mit Neuronenausgängen der Neuronenschicht L5 gekoppelt ist. Auch kann die Neuronenschicht L4 vorsehen, eingangsseitig mit Ausgängen der Neuronenschicht L2 verbunden zu sein.

Im Folgenden soll ein Verfahren zum Bestimmen einer optimieren Netzkonfiguration für ein neuronales Netz basierend auf einer vorbestimmten Anwendung durchgeführt werden. Die Anwendung bestimmt sich im Wesentlichen durch die Größe von Eingangsgrößenvektoren und der diesen zugeordneten Ausgangsgrößenvektoren, die die Trainingsdaten, die ein gewünschtes Netzwerkverhalten bzw. eine bestimmte Aufgabenstellung definieren, darstellen.

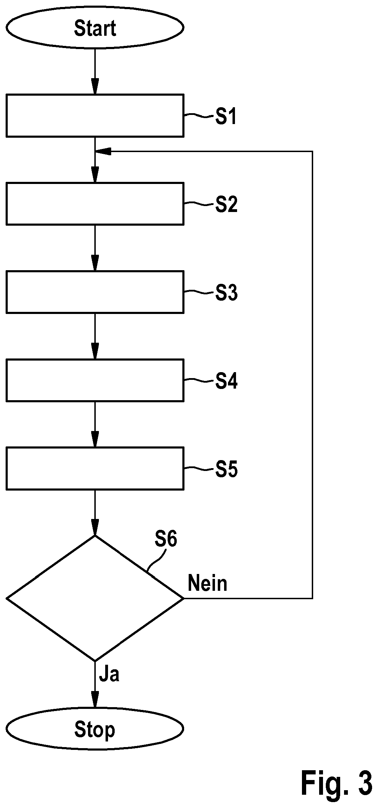

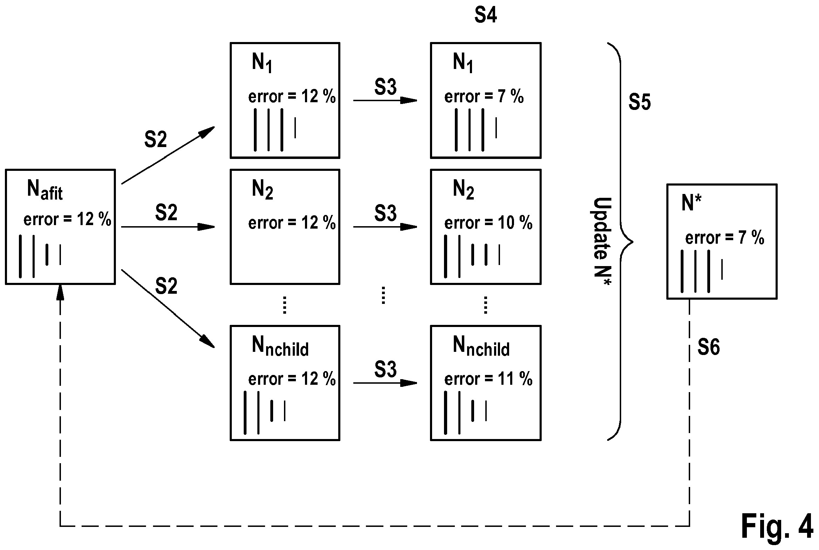

In Figur 3 wird ein Verfahren zum Ermitteln einer Netzkonfiguration eines neuronalen Netzes näher beschrieben. Figur 4 zeigt entsprechend den Verlauf der Iteration der Netzkonfiguration, Zunächst wird von einer Anfangsnetzkonfiguration für ein neuronales Netz in Schritt S1 ausgegangen.

Aus der Anfangsnetzkonfiguration werden als aktuelle Netzkonfiguration $N_{akt}$ in Schritt S2 durch Anwendung von verschiedenen approximierten Netzwerkmorphismen Variationen von Netzkonfigurationen $N_{1...nchild}$ bestimmt.

Die Netzwerkmorphismen entsprechen allgemein vorbestimmten Regeln, die mithilfe eines Operators bestimmt sein können. Allgemein ist ein Netzwerkmorphismus ein Operator T, der ein neuronales Netz N auf ein Netz TN abbildet, wobei gilt:

$$N^w(x) = (TN)^{\tilde{w}}(x) \text{ für } x \in X$$

dabei sind w die Netzparameter (Gewichtungen) des neuronalen Netzes N und $\tilde{w}$ die Netzparameter des variierten neuronalen Netzes TN. X entspricht dem Raum, auf dem das neuronale Netz angewendet wird. Netzwerkmorphismen sind Funktionen, die ein neuronales Netz so manipulieren, dass deren Vorhersagefehler für den aktuellen Trainingszustand zu dem unveränderten neuronalen Netz identisch ist, jedoch nach einem weiteren Training unterschiedliche Leistungsparameter aufweisen können. Durch die Variation des Schritts S2 erhält man $n_{child}$ Netzkonfigurationsvarianten.

Hierin sollen approximative Netzwerkmorphismen verwendet werden, bei denen die Vorgabe, dass nach Anwendung des approximativen Netzwerkmorphismus das die anfängliche Netzkonfiguration und die modifizierte Netzkonfiguration gleiche Vorhersagefehler aufweisen, nur eingeschränkt gilt. Approximative Netzwerkmorphismen sind Regeln für Änderungen der bestehenden Netzwerkkonfiguration, wobei die resultierende Leistungsfähigkeit des modifizierten neuronalen Netzes von der Leistungsfähigkeit des zugrundeliegenden neuronalen Netzes um ein bestimmtes Maß abweichen darf. Approximative Netzwerkmorphismen können daher Hinzufügen oder Löschen von einzelnen Neuronen oder Neuronenschichten sowie Modifikationen eines oder mehrerer Neuronen hinsichtlich deren eingangsseitigen und ausgangsseitigen Kopplungen mit weiteren Neuronen des neuronalen Netzes oder hinsichtlich der Änderungen des Neuronenverhaltens, insbesondere die Wahl deren Aktivierungsfunktionen, umfassen. Insbesondere sollen approximative Netzwerkmorphismen nur Änderungen von Teilen des neuronalen Netzes unter Beibehaltung von Teilen der aktuellen Netzkonfiguration betreffen.

Die durch die Anwendung der obigen approximativen Netzwerkmorphismen T generierten, variierten neuronalen Netze werden zum Erreichen eines minimierten Vorhersagefehlers trainiert, der sich auf p(x), d. h. einer Verteilung auf X ergibt, d. h. der Netzwerkmorphismus T ist ein approximativer Netzwerkmorphismus, falls gilt:

$$\min_{\tilde{w}} E_{p(x)} \left\| N^w(x) - (TN)^{\tilde{w}}(x) \right\| < \varepsilon$$

wobei $\varepsilon > 0$ und beispielsweise zwischen 0,5% und 10% , vorzugsweise zwischen 1% und 5%, und $E_{p(x)}$ einem Vorhersagefehler über die Verteilung p(x) entspricht.

In der Praxis ist die obige Gleichung nicht auswertbar, da die Verteilung p(x) in der Regel unbekannt ist, und X in der Regel sehr groß ist. Daher kann das obige Kriterium abgewandelt werden und lediglich auf die zur Verfügung gestellten Trainingsdaten $X_{train}$ angewendet werden.

$$\min_{\tilde{w}} \frac{1}{|X_{train}|} \sum_{x \in X_{train}} \left\| N^w(x) - (TN)^{\tilde{w}}(x) \right\|$$

Das Minimum der obigen Gleichung kann mit dem gleichen Verfahren ausgewertet werden, das auch für das Training der variierten neuronalen Netze benutzt wird, wie beispielsweise SGB: Stochastic Gradient Descent. Dies ist Trainingsphase 1 im oben beschriebenen Verfahren, wie nachfolgend beschrieben:

In Schritt S3 werden die so erhaltenen Netzkonfigurationen trainiert. Dazu werden beim Training die Netzparameter der variierten Netzkonfigurationen wie folgt ermittelt. Zunächst wird bestimmt, welche der Neuronen durch die Anwendung des approximativen Netzwerkmorphismus betroffen sind. Betroffene Neuronen entsprechen denjenigen Neuronen, die eingangsseitig oder ausgangsseitig mit einer Variation in der Netzwerkkonfiguration in Verbindung stehen. So sind beispielsweise betroffene Neuronen all diejenigen Neuronen,

- die eingangsseitig und ausgangsseitig mit einem durch die Variation entfernten Neuron in Verbindung standen, und
- die eingangsseitig oder ausgangsseitig mit einem hinzugefügten Neuron in Verbindung stehen, und
- die eingangsseitig oder ausgangsseitig mit einem modifizierten Neuron in Verbindung stehen.

Per Definition führt die Anwendung des approximierten Netzwerkmorphismus nur zu einer Teiländerung der Netzkonfiguration in den in Schritt S2 ermittelten Netzkonfigurationen. Somit entsprechen Teile des neuronalen Netzes der variierten Netzkonfigurationen Teilen des neuronalen Netzes der zugrundeliegenden aktuellen Netzkonfiguration.

Das Trainieren erfolgt nun in einer ersten Trainingsphase für alle generierten Netzkonfigurationsvarianten unter vorbestimmten ersten Trainingsbedingungen. Beim Trainieren der durch die Netzkonfigurationsvarianten vorgegebenen neuronalen Netze werden nun die unveränderten, nicht betroffen Teile bzw. Neuronen nicht mittrainiert, d. h. die entsprechenden Netzparameter, die den Neuronen der nicht betroffenen Teile des neuronalen Netzes zugeordnet sind, werden unverändert übernommen und für das weitere Training fixiert. Somit werden lediglich die Netzparameter der betroffenen Neuronen in dem Trainingsverfahren berücksichtigt und entsprechend variiert.

Um für alle Netzkonfigurationsvarianten ein identisches Bewertungsmaß zu erhalten, erfolgt das Trainieren für eine vorbestimmte Anzahl von Trainingszyklen mit einem vorbestimmten Trainingsalgorithmus. Der vorbestimmte Trainingsalgorithmus kann beispielsweise eine identische Lernrate und ein identisches Lernverfahren, z.B. eines Backpropagation- oder cosine-annealing-Lernverfahrens vorsehen.

Weiterhin kann beispielsweise der vorbestimmte Trainingsalgorithmus die der ersten Trainingsphase eine vorbestimmte erste Anzahl von Trainingsdurchläufen wie z.B. zwischen 3 und 10, insbesondere von 5, aufweisen.

In einer zweite bzw. weiteren Trainingsphase erfolgt das Trainieren nun für alle generierten Netzkonfigurationsvarianten unter vorbestimmten zweiten Trainingsbedingungen gemäß einem herkömmlichen Trainingsverfahren, bei dem alle Netzparameter trainiert werden.

Um für alle Netzkonfigurationsvarianten ein identisches Bewertungsmaß zu erhalten, erfolgt das Trainieren der zweiten Trainingsphase unter identischen Bedingung, d.h. einem identischen Trainingsalgorithmus. für eine vorbestimmte Anzahl von Trainingszyklen, einer identischen Lernrate und insbesondere unter Anwendung eines Backpropagation- oder cosine-annealing-Lernverfahrens gemäß den zweiten Trainingsbedingungen. Beispielsweise kann die zweite Trainingsphase eine zweite Anzahl von Trainingsdurchläufen wie z.B. zwischen 15 und 100 insbesondere 20 aufweisen

Mithilfe der Formel

$$N^* = arg \min_{j=1,..,n_{child}} error(TN_j)$$

wird in Schritt S4 nach dem Training der Vorhersagefehler $error(TN_j)$ als Leistungsparameter für jede der Netzkonfigurationsvarianten ermittelt und in Schritt S5 diejenige bzw. diejenigen Netzkonfigurationsvarianten für eine weitere Optimierung ausgewählt, die den geringsten Vorhersagefehler aufweist bzw. aufweisen.

Nach einer Überprüfung eines Abbruchkriteriums in Schritt S6 werden die eine oder die mehreren Netzkonfigurationsvarianten werden als aktuelle Netzkonfigurationen für einen nächsten Rechenzyklus bereitgestellt. Ist die Abbruchbedingung nicht erfüllt (Alternative: Nein), so wird das Verfahren mit Schritt S2 fortgesetzt. Andernfalls (Alternative: Ja) wird das Verfahren abgebrochen. Die Abbruchbedingung kann umfassen:

- eine vorbestimmte Anzahl von Iterationen wurde erreicht,
- ein vorbestimmter Vorhersagefehlerwert durch mindestens eine der Netzkonfigurationsvarianten wurde erreicht.

Das Verfahren ist ebenso anwendbar auf spezielle neuronale Netze, wie z.B. konvolutionelle neuronale Netze, die Berechnungsschichten unterschiedlicher Schichtkonfigurationen aufweisen, indem nach der Anwendung der approximativen Netzwerkmorphismen zur Ermittlung der Netzkonfigurationsvariationen nur diejenigen Teile, in diesem Fall einzelne Schichten des konvolutionellen neuronalen Netzes trainiert werden, die durch den entsprechenden approximativen Netzwerkmorphismus geändert worden sind. Schichtkonfigurationen können umfassen: eine Faltungsschicht, eine Normalisierungsschicht, eine Aktivierungsschicht und eine Max-Pooling-Schicht. Diese können wie Neuronenschicht von herkömmlichen neuronalen Netzen straightforward gekoppelt sein, Rückkopplungen und/oder Überspringen von einzelnen Schichten beinhalten. Die Schichtparameter können beispielsweise die Schichtgröße, eine Größe des Filterkernels einer Faltungsschicht, einen Normalisierungskernel für eine Normalisierungsschicht, einen Aktivierungskernel für eine Aktivierungsschicht und dergleichen umfassen.

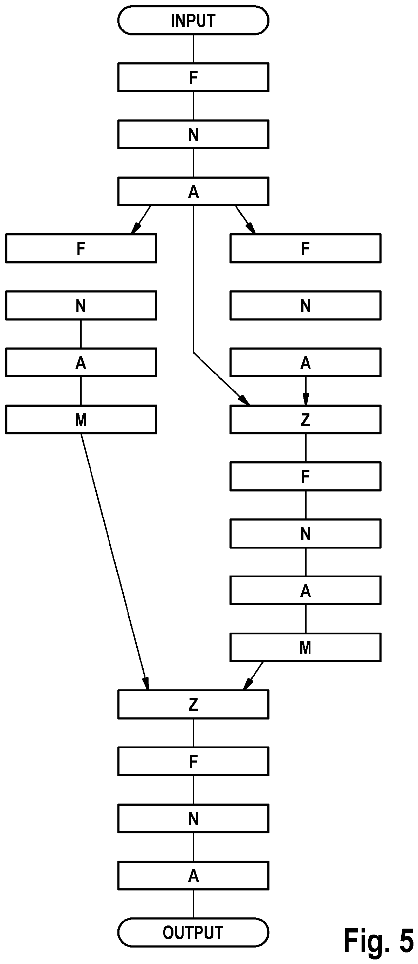

Ein Beispiel für eine resultierende Netzkonfiguration ist in Figur 5 schematisch dargestellt mit Faltungsschichten F, Normalisierungsschichten N, Aktivierungsschichten A, Zusammenführungsschichten Z zum Zusammenführen von Ausgängen verschiedener Schichten und Maxpooling-Schichten M. Man erkennt Möglichkeiten der Kombination der Schichten und der Variationsmöglichkeiten einer solchen Netzkonfiguration.

Das obige Verfahren ermöglicht in verbesserter Weise die Architektursuche von Netzkonfigurationen zu beschleunigen, da die Evaluierung der Leistungsfähigkeit Vorhersagefehler der Varianten von Netzkonfigurationen erheblich schneller vorgenommen werden kann.

Die so ermittelten Netzkonfigurationen werden für die Auswahl einer geeigneten Konfiguration eines neuronalen Netzes für eine vorgegebene Aufgabe verwendet. Die Optimierung der Netzkonfiguration steht in engem Zusammenhand zu der gestellten Aufgabe. Die Aufgabe ergibt sich durch die Vorgabe von Trainingsdaten, so dass vor dem eigentlichen Training zunächst die Trainingsdaten definiert werden müssen, aus denen die optimierte/geeignete Netzkonfiguration für die gestellte Aufgabe ermittelt wird. Beispielsweise können Bilderkennungs- bzw. -klassifkationsverfahren durch Trainingsdaten definiert werden, die Eingangsbilder, Objektzuordnungen, Objektklassifikationen beinhalten. Netzkonfigurationen können auf diese Weise grundsätzlich für alle durch Trainingsdaten definierten Aufgaben bestimmt werden.

So wird ein derart konfiguriertes neuronales Netz in einem Steuergerät eines technischen Systems, wobei das technische System ein Roboter, ein Fahrzeug, ein Werkzeug oder eine Werkmaschine eingesetzt, um abhängig von Eingangsgrößen Ausgangsgrößen zu bestimmen. Die Ausgangsgrößen können beispielsweise eine Klassifizierung der Eingangsgröße (d.h. z.B. eine Zuordnung der Eingangsgröße zu einer Klasse einer vorgebbaren Mehrzahl von Klassen) und in dem Fall, dass die Eingangsdaten Bilddaten umfassen, eine insbesondere pixelweise semantische Segmentierung dieser Bilddaten (d.h. z.B. eine bereichs- oder pixelweise Zuordnung von Ausschnitten der Bilddaten zu einer Klasse einer vorgebbaren Mehrzahl von Klassen) umfassen. Als Eingangsgrößen des neuronalen Netzes kommen Sensordaten oder abhängig von Sensordaten ermittelte Größen in Frage. Die Sensordaten können von Sensoren des technischen Systems stammen oder von dem technischen System von extern empfangen werden. Die Sensoren können insbesondere mindestens einen Videosensor und/oder mindestens einen Radarsensor und/oder mindestens einen LiDAR-Sensor und/oder mindestens einen Ultraschallsensor umfassen. Abhängig von den Ausgangsgrößen des neuronalen Netzes wird durch eine Recheneinheit des Steuergeräts des technischen Systems mindestens ein Aktor des technischen Systems mit einem Ansteuersignal angesteuert. Beispielsweise kann so eine Bewegung eines Roboters oder Fahrzeugs gesteuert werden oder eine Steuerung einer Antriebseinheit oder eines Fahrerassistenzsystems eines Fahrzeugs erfolgen.

## Patentansprüche

1. Computerimplementiertes Verfahren zum Ermitteln einer geeigneten Netzkonfiguration für ein neuronales Netz (1) für eine vorgegebene Anwendung zur Realisierung von Funktionen eines technischen Systems, wobei das technische System ein Roboter, ein Fahrzeug, ein Werkzeug oder eine Werkmaschine ist, wobei die vorgegebene Anwendung in Form von Trainingsdaten bestimmt ist; wobei die Netzkonfiguration die Architektur des neuronalen Netzes (1) angibt, wobei das derartig konfigurierte neuronale Netz (1) in einem Steuergerät des technischen Systems eingesetzt wird, um abhängig von Eingangsgrößen Ausgangsgrößen zu bestimmen, wobei die Eingangsgrößen Bilddaten oder Sensordaten eines Videosensors und/oder eines Radarsensors und/oder eines LiDAR-Sensors und/oder eines Ultraschallsensors sind, wobei abhängig von den Ausgangsgrößen des neuronalen Netzes durch eine Recheneinheit des Steuergeräts des technischen Systems mindestens ein Aktor des technischen Systems mit einem Ansteuersignal angesteuert wird, mit folgenden Schritten:

   f) ausgehend von einer aktuellen Netzkonfiguration, Generieren (S1, S2) von mehreren zu evaluierenden Netzkonfigurationen, die sich in einem Teil von der aktuellen Netzkonfiguration unterscheiden, durch Anwendung von approximativen Netzwerkmorphismen,
   wobei ein Netzwerkmorphismus ein Operator $T$ ist, der ein neuronales Netz $N$ auf ein variiertes neuronales Netz $TN$ abbildet, wobei gilt:

   $$N^w(x) = (TN)^{\tilde{w}}(x) \text{ für } x \in X$$

   dabei sind $w$ Netzparameter des neuronalen Netzes $N$ und $\tilde{w}$ Netzparameter des variierten neuronalen Netzes $TN$ und $X$ entspricht einem Raum, auf dem das neuronale Netz angewendet wird,
   wobei approximative Netzwerkmorphismen Regeln für Änderungen der bestehenden Netzwerkkonfiguration sind, wobei die resultierende Leistungsfähigkeit des modifizierten neuronalen Netzes von der Leistungsfähigkeit des zugrundeliegenden neuronalen Netzes um ein bestimmtes Maß abweichen darf, sodann ist ein Netzwerkmorphismus ein approximativer Netzwerkmorphismus, wenn für zur Verfügung gestellte Trainingsdaten $X_{train}$ gilt:

   $$\min_{\tilde{w}} \frac{1}{|X_{train}|} \sum_{x \in X_{train}} \left\| N^w(x) - (TN)^{\tilde{w}}(x) \right\| < \varepsilon$$

   mit $\varepsilon > 0$;
   g) Ermitteln betroffener Netzteile der Netzkonfigurationen;
   h) Mehrphasiges Trainieren (S3) jeder der zu evaluierenden Netzkonfigurationen unter vorbestimmten Trainingsbedingungen,
   wobei in einer ersten Phase jeweils Netzparameter eines nicht durch die Anwendung des jeweiligen approximativen Netzwerkmorphismus geänderten Teils bei dem Trainieren unberücksichtigt bleibt und wobei in mindestens einer weiteren Phase alle Netzparameter trainiert werden, i) Bestimmen (S4) eines resultierenden Vorhersagefehles ($error(TN_j)$) für jede der zu evaluierenden Netzkonfigurationen; j) Auswählen (S5) der geeigneten Netzkonfiguration abhängig von den bestimmten Vorhersagefehlern.

2. Verfahren nach Anspruch 1, wobei die Schritte a) bis e) iterativ mehrfach durchgeführt werden, indem eine jeweils ausgewählte geeignete Netzkonfiguration als aktuelle Netzkonfiguration für die Generierung mehrerer zu evaluierender Netzkonfigurationen verwendet wird.

3. Verfahren nach Anspruch 2, wobei das Verfahren beendet wird (S6), wenn eine Abbruchbedingung erfüllt ist, wobei die Abbruchbedingung das Eintreten mindestens eines der folgenden Ereignisse beinhaltet:

   - eine vorbestimmte Anzahl von Iterationen wurde erreicht,
   - ein vorbestimmter Wert des Vorhersagefehlers ($error(TN_j)$) durch mindestens eine der Netzkonfigurationsvarianten wurde erreicht.

4. Verfahren nach einem der Ansprüche 1 bis 3, wobei die approximativen Netzwerkmorphismen jeweils eine Änderung einer Netzkonfiguration bei einem aktuellen Trainingszustand vorsehen, bei denen sich der Vorhersagefehler ($error(TN_j)$) um nicht mehr als einen vorgegebenen maximalen Fehlerbetrag ändert.

5. Verfahren nach einem der Ansprüche 1 bis 4, wobei die approximativen Netzwerkmorphismen für herkömmliche neuronale Netze jeweils das Entfernen, Hinzufügen und/oder Modifizieren eines oder mehrerer Neuronen oder einer oder mehreren Neuronenschichten vorsehen.

6. Verfahren nach einem der Ansprüche 1 bis 4, wobei die approximativen Netzwerkmorphismen für konvolutionelle neuronale Netze jeweils das Entfernen, Hinzufügen und/oder Modifizieren eines oder mehrerer Schichten vorsehen, wobei die Schichten eine oder mehrere Faltungsschichten, eine oder mehrere Normalisierungsschichten, eine oder mehrere Aktivierungsschichten und eine oder mehrere Zusammenführungsschichten umfassen.

7. Verfahren nach einem der Ansprüche 5 und 6, wobei die Trainingsdaten durch Eingangsgrößenvektoren und diesen zugeordneten Ausgangsgrößenvektoren vorgegeben sind, wobei der Vorhersagefehler der jeweiligen Netzkonfiguration nach der weiteren Trainingsphase als ein Maß bestimmt wird, dass sich aus den jeweiligen Abweichungen zwischen Modellwerten, die sich durch das durch die jeweilige Netzkonfiguration bestimmten neuronalen Netzes basierend auf den Eingangsgrößenvektoren ergeben, und den den Eingangsgrößenvektoren zugeordneten Ausgangsgrößenvektoren ergibt.

8. Verfahren nach einem der Ansprüche 1 bis 7, wobei die gemeinsamen vorbestimmten ersten Trainingsbedingungen für das Trainieren jeder der Netzkonfigurationen in der ersten Trainingsphase eine Anzahl von Trainingsdurchläufen und/oder eine Trainingszeit und/oder eine Trainingsmethode vorgeben und/oder wobei die gemeinsamen vorbestimmten zweiten Trainingsbedingungen für das Trainieren jeder der Netzkonfigurationen in der zweiten Trainingsphase eine Anzahl von Trainingsdurchläufen und/oder eine Trainingszeit und/oder eine Trainingsmethode vorgeben .

9. Verfahren nach einem der Ansprüche 1 bis 8, wobei betroffene Netzteile des neuronalen Netzes all diejenigen Netzteile sind,

   - die eingangsseitig und ausgangsseitig mit einem durch die Variation entfernten Netzteil in Verbindung standen, und
   - die eingangsseitig oder ausgangsseitig mit einem hinzugefügten Netzteil in Verbindung stehen, und
   - die eingangsseitig oder ausgangsseitig mit einem modifizierten Netzteil in Verbindung stehen.

10. Vorrichtung, die eingerichtet ist, das Verfahren nach einem der vorhergehenden Ansprüche 1 bis 9 auszuführen.

11. Steuergerät konfiguriert zum Steuern von Funktionen eines technischen Systems mit einem Ansteuersignal für mindestens einen Aktor des technischen Systems durch eine Recheneinheit des Steuergeräts abhängig von den Ausgangsgrößen eines neuronalen Netzes (1) dessen Netzkonfiguration mithilfe eines Verfahrens nach einem der Ansprüche 1 bis 9 ermittelt wurde, wobei das technische System ein Roboter, ein Fahrzeug, ein Werkzeug oder eine Werkmaschine ist.

12. Computerprogramm, welches Befehle umfasst, die eingerichtet ist, wenn diese auf einem Computer ausgeführt werden, diesen Computer veranlassen das Verfahren nach einem der Ansprüche 1 bis 9 auszuführen.

13. Elektronisches Speichermedium, auf welchem ein Computerprogramm nach Anspruch 12 gespeichert ist.

**Claims**

1. Computer-implemented method for ascertaining a suitable network configuration for a neural network (1) for a predefined application for realizing functions of a technical system, wherein the technical system is a robot, a vehicle, a tool or a factory machine, wherein the predefined application is determined in the form of training data; wherein the network configuration indicates the architecture of the neural network (1), wherein the neural network (1) configured in this way is used in a control device of the technical system in order to determine output variables depending on input variables, wherein the input variables are image data or sensor data of a video sensor and/or of a radar sensor and/or of a LiDAR sensor and/or of an ultrasonic sensor, wherein at least one actuator of the technical system is controlled by a control signal depending on the output variables of the neural network by means of a computing unit of the control device of the technical system, comprising the following steps:

   f) proceeding from a current network configuration, generating (S1, S2) a plurality of network configurations to be evaluated, a portion of which differs from the current network configuration, by applying approximative network morphisms,
   wherein a network morphism is an operator $T$ which maps a neural network $N$ onto a varied neural network $TN$, wherein it holds true that:

$$N^w(x) = (TN)^{\tilde{w}}(x) \quad \texttt{for} \quad x \in X$$

   in this case, w are network parameters of the neural network $N$ and $\tilde{w}$ are network parameters of the varied neural network $TN$ and $X$ corresponds to a space to which the neural network is applied,
   wherein approximative network morphisms are rules for changes in the existing network configuration, wherein the resulting performance of the modified neural network is permitted to deviate from the performance of the underlying neural network by a specific measure, and then a network morphism is an approximative network morphism if the following holds true for training data $X_{train}$ made available:

$$\min_{\tilde{w}} \frac{1}{|X_{train}|} \sum_{x \in X_{train}} \left\| N^w(x) - (TN)^{\tilde{w}}(x) \right\| < \varepsilon$$

   where $\varepsilon > 0$;
   g) ascertaining affected network portions of the network configurations;
   h) multiphase training (S3) of each of the network configurations to be evaluated, under predetermined training conditions,
   wherein, in a first phase, network parameters of a portion not changed by the application of the respective approximative network morphism are in each case disregarded during the training and
   wherein, in at least one further phase, all network parameters are trained,
   i) determining (S4) a resulting prediction error ($error(TN_j)$) for each of the network configurations to be evaluated;
   j) selecting (S5) the suitable network configuration depending on the determined prediction errors.

2. Method according to Claim 1, wherein steps a) to e) are carried out iteratively multiple times by a suitable network configuration respectively selected being used as current network configuration for the generation of a plurality of network configurations to be evaluated.

3. Method according to Claim 2, wherein the method is ended (S6) if a termination condition is met, wherein the termination condition includes the occurrence of at least one of the following events:

   - a predetermined number of iterations has been reached,
   - a predetermined value of the prediction error ($error(TN_j)$) has been reached by at least one of the network configuration variants.

4. Method according to any of Claims 1 to 3, wherein the approximative network morphisms each provide a change in a network configuration at a current training state, and in the case of these the prediction error (error($TN_j$)) changes by not more than a predefined maximum error amount.

5. Method according to any of Claims 1 to 4, wherein the approximative network morphisms for conventional neural networks each provide for removing, adding and/or modifying one or more neurons or one or more neuron layers.

6. Method according to any of Claims 1 to 4, wherein the approximative network morphisms for convolutional neural networks each provide for removing, adding and/or modifying one or more layers, wherein the layers comprise one or more convolutional layers, one or more normalization layers, one or more activation layers and one or more merging layers.

7. Method according to either of Claims 5 and 6, wherein the training data are predefined by input variable vectors and output variable vectors assigned thereto, wherein the prediction error of the respective network configuration is determined after the further training phase as a measure resulting from the respective deviations between model values, which result from the neural network determined by the respective network configuration on the basis of the input variable vectors, and the output variable vectors assigned to the input variable vectors.

8. Method according to any of Claims 1 to 7, wherein the common predetermined first training conditions for training each of the network configurations in the first training phase predefine a number of training passes and/or a training time and/or a training method and/or wherein the common predetermined second training conditions for training each of the network configurations in the second training phase predefine a number of training passes and/or a training time and/or a training method.

9. Method according to any of Claims 1 to 8, wherein affected network portions of the neural network are all those network portions

   - which were connected on the input side and on the output side to a network portion removed by the variation, and
   - which are connected on the input side or on the output side to an added network portion, and
   - which are connected on the input side or on the output side to a modified network portion.

10. Apparatus designed to carry out the method according to any of the preceding Claims 1 to 9.

11. Control device configured for controlling functions of a technical system with a control signal for at least one actuator of the technical system by means of a computing unit of the control device depending on the output variables of a neural network (1) whose network configuration has been ascertained with the aid of a method according to any of Claims 1 to 9, wherein the technical system is a robot, a vehicle, a tool or a factory machine.

12. Computer program comprising instructions which, when they are executed on a computer, are designed to cause said computer to carry out the method according to any of Claims 1 to 9.

13. Electronic storage medium on which a computer program according to Claim 12 is stored.

**Revendications**

1. Procédé mis en œuvre par ordinateur pour identifier une configuration de réseau appropriée pour un réseau neuronal (1) pour une application prédéfinie en vue de la réalisation de fonctions d'un système technique, le système technique étant un robot, un véhicule, un outil ou une machine-outil, l'application prédéfinie étant déterminée sous la forme de données d'entraînement ; la configuration du réseau indiquant l'architecture du réseau neuronal (1), le réseau neuronal (1) ainsi configuré étant utilisé dans un contrôleur du système technique afin de déterminer des grandeurs de sortie en fonction de grandeurs d'entrée, les grandeurs d'entrée étant des données d'image ou des données de capteur d'un capteur vidéo et/ou d'un capteur radar et/ou d'un capteur LiDAR et/ou d'un capteur à ultrasons, au moins un actionneur du système technique étant commandé par un signal de commande en fonction des grandeurs de sortie du réseau neuronal par une unité de calcul du contrôleur du système technique, comprenant les étapes suivantes :

f) en partant d'une configuration de réseau actuelle, génération (S1, S2) de plusieurs configurations de réseau à évaluer, lesquelles se différencient en partie de la configuration de réseau actuelle, en appliquant des morphismes de réseau approximatifs,

un morphisme de réseau étant un opérateur *T* qui représente un réseau neuronal *N* sur un réseau neuronal varié *TN*, la relation suivante étant ici vérifiée :

$$N^w(x) = (TN)^{\tilde{w}}(x) \quad \texttt{pour} \quad x \in X$$

où w désigne les paramètres de réseau du réseau neuronal *N* et $\tilde{w}$ les paramètres de réseau du réseau neuronal varié *TN* et *X* correspond à un espace sur lequel est appliqué le réseau neuronal,

les morphismes de réseau approximatifs étant des règles pour des modifications de la configuration de réseau existante, la capacité de performance résultante du réseau neuronal modifié pouvant dans une certaine mesure s'écarter de la capacité de performance du réseau neuronal sous-jacent, un morphisme de réseau étant ensuite un morphisme de réseau approximatif lorsque la relation suivante est vérifiée pour les données d'entraînement $X_{train}$ mises à disposition :

$$\min_{\tilde{w}} \frac{1}{|X_{train}|} \sum_{x \in X_{train}} \left\| N^w(x) - (TN)^{\tilde{w}}(x) \right\| < \varepsilon$$

avec $\varepsilon > 0$ ;

g) identification des parties de réseau concernées des configurations de réseau ;

h) entraînement en plusieurs phases (S3) de chacune des configurations de réseau à évaluer dans des conditions d'entraînement prédéterminées,

dans une première phase, les paramètres de réseau d'une partie non modifiée par l'application du morphisme de réseau approximatif respectif n'étant pas pris en compte lors de l'entraînement et

tous les paramètres du réseau étant entraînés dans au moins une phase supplémentaire,

i) détermination (S4) d'une erreur de prédiction résultante (*error*($TN_j$)) pour chacune des configurations de réseau à évaluer ;

j) sélection (S5) de la configuration de réseau appropriée en fonction des erreurs de prédiction déterminées.

2. Procédé selon la revendication 1, les étapes a) à e) étant exécutées plusieurs fois de manière itérative en utilisant une configuration de réseau appropriée respectivement sélectionnée en tant que configuration de réseau actuelle pour la génération de plusieurs configurations de réseau à évaluer.

3. Procédé selon la revendication 2, le procédé prenant fin (S6) lorsqu'une condition d'interruption est remplie, la condition d'interruption comprenant la survenue d'au moins l'un des événements suivants :

   - un nombre prédéterminé d'itérations a été atteint,
   - une valeur prédéterminée de l'erreur de prédiction (*error*($TN_j$)) a été atteinte par au moins une des variantes de configuration de réseau.

4. Procédé selon l'une des revendications 1 à 3, les morphismes de réseau approximatifs prévoyant respectivement une modification d'une configuration de réseau lors d'un état d'entraînement actuel, avec lesquels l'erreur de prédiction (*error*($TN_j$)) ne varie pas de plus d'une valeur d'erreur maximale prédéfinie.

5. Procédé selon l'une des revendications 1 à 4, les morphismes de réseau approximatifs pour des réseaux neuronaux classiques prévoyant respectivement la suppression, l'ajout et/ou la modification d'un ou plusieurs neurones ou d'une ou plusieurs couches de neurones.

6. Procédé selon l'une des revendications 1 à 4, les morphismes de réseau approximatifs pour réseaux neuronaux convolutifs prévoyant respectivement la suppression, l'ajout et/ou la modification d'une ou plusieurs couches, les couches comprenant une ou plusieurs couches de convolution, une ou plusieurs couches de normalisation, une ou plusieurs couches d'activation et une ou plusieurs couches de fusion.

7. Procédé selon l'une des revendications 5 et 6, les données d'entraînement étant prédéfinies par des vecteurs de grandeurs d'entrée et des vecteurs de grandeurs de sortie associés à ceux-ci, l'erreur de prédiction de la configuration de réseau respective étant déterminée après la phase d'entraînement supplémentaire comme une mesure qui résulte des écarts respectifs entre des valeurs de modèle qui sont obtenues par le réseau neuronal déterminé par la configuration de réseau respective sur la base des vecteurs de grandeurs d'entrée et des vecteurs de grandeurs de sortie associés aux vecteurs de grandeurs d'entrée.

8. Procédé selon l'une des revendications 1 à 7, les premières conditions d'entraînement prédéterminées communes pour l'entraînement de chacune des configurations de réseau dans la première phase d'entraînement prédéfinissant un nombre de cycles d'entraînement et/ou un temps d'entraînement et/ou une méthode d'entraînement et/ou les deuxièmes conditions d'entraînement prédéterminées communes pour l'entraînement de chacune des configurations de réseau dans la deuxième phase d'entraînement prédéfinissant un nombre de cycles d'entraînement et/ou un temps d'entraînement et/ou une méthode d'entraînement.

9. Procédé selon l'une des revendications 1 à 8, les parties de réseau concernées du réseau neuronal étant toutes les parties de réseau,

   - qui étaient connectées, côté entrée et côté sortie, à une partie de réseau supprimée par la variation, et
   - qui étaient connectées, côté entrée et côté sortie, à une partie de réseau ajoutée par la variation, et
   - qui étaient connectées, côté entrée et côté sortie, à une partie de réseau modifiée par la variation.

10. Dispositif, qui est conçu pour mettre en œuvre le procédé selon l'une des revendications 1 à 9 précédentes.

11. Contrôleur configuré pour commander des fonctions d'un système technique avec un signal de commande pour au moins un actionneur du système technique par une unité de calcul de l'appareil de commande en fonction des grandeurs de sortie d'un réseau neuronal (1) dont la configuration de réseau a été identifiée à l'aide d'un procédé selon l'une des revendications 1 à 9, le système technique étant un robot, un véhicule, un outil ou une machine-outil.

12. Programme informatique, lequel comporte des instructions qui, lorsqu'elles sont exécutées sur un ordinateur, sont conçues pour amener cet ordinateur à mettre en œuvre le procédé selon l'une des revendications 1 à 9.

13. Support de stockage électronique sur lequel est stocké un programme informatique selon la revendication 12.

**Fig. 1**

2E 2Z 2Z 2A

L1 L2 L3 L4 L5 L6

**Fig. 2**

Fig. 3

Fig. 4

Fig. 5